# EUROPEAN PATENT APPLICATION

(11) **EP 4 131 108 A1**
(43) Date of publication of application: **08.02.2023**
(21) Application number: 21782363.2
(22) Date of filing: 02.04.2021
(51) Int. Cl.: G06Q 10/10

(54) **COMPUTER SYSTEM, METHOD, AND PROGRAM FOR IMPROVING RELATIONS WITH INDIVIDUAL PARTIES IN TWO-PARTY COMMUNICATION**

(30) Priority: 03.04.2020 JP 2020067674
(71) Applicant: KAKEAI, Inc., Tokyo, 107-0052 (JP)
(72) Inventor: HONDA, Hidetaka, Tokyo 107-0052 (JP); MINAGAWA, Emi, Tokyo 107-0052 (JP); KOYASU, Akira, Tokyo 107-0052 (JP); KONISHI, Shota, Tokyo 107-0052 (JP); WANG, Beiyi, Tokyo 107-0052 (JP); TACHINO, Natsuki, Tokyo 107-0052 (JP)
(74) Representative: Uexküll & Stolberg
(86) International application number: PCT/JP2021/014359
(87) International publication number: WO 2021/201285

(57) **Abstract**

This computer system for aiding two-party communication comprises: a receiving means that receives at least one topic, which a first person from among the two parties wishes to discuss during the communication, and a response expected by the first person from a second person, from among the two parties, during the communication regarding the at least one topic; and a providing means that, on the basis of the at least one topic and the response, provides advice to the second person during the communication.

## Description

### [Technical Field]

The present invention relates to a computer system, method, and program for supporting a communication. The present invention specifically relates to a computer system, method, and program for supporting a two-person communication (between a first person and a second person).

### [Background Art]

A supervisor often has a meeting with a team staff in an organization to, for example, set a goal, manage progress, or report results for a team staff, etc. A system for supporting such a meeting is known (Patent Literature 1) .

Such meetings include a meeting known as a "one-on-one meeting" (or "one-on-one"), which is held one to one between a supervisor and a team staff. "One-on-one" is intended to promote growth of a team staff through the team staff having a conversation with an initiative with a supervisor.

### [Citation List]

### [Patent Literature]

[PTL 1] Japanese Laid-Open Publication No. 2006-190162

### [Summary of Invention]

### [Technical Problem]

The inventors of the invention contemplated that the quality of two-person communication should improve if it is possible to facilitate one of the two in a two-person communication to be able to engage with the other in the two-person communication in a suitable manner.

The objective of the invention is to provide a computer system, method, and program for supporting a two-person communication for improving the quality of the two-person communication.

### [Solution to Problem]

In one embodiment of the invention, a computer system for supporting a two-person communication comprises:
receiving means for receiving at least one topic a first person between two people wishes to discuss in the communication and a response expected from a second person between the two people by the first person in the communication regarding the at least one topic; and
providing means for providing an advice for the communication to the second person based on the at least one topic and the response.

In one embodiment of the invention, the computer system for supporting a two-person communication further comprises:
second receiving means for receiving evaluation for a response by the second person when a same response as the response is expected in the communication regarding the at least one topic;
wherein the providing means is configured to provide an advice for the communication based on the at least one topic, the response, and the evaluation for the response.

In one embodiment of the invention, the providing means is configured to:
determine a characteristic of the second person when the response is expected in the communication regarding the at least one topic based on the at least one topic, the response, and the evaluation for the response; and
determine the advice based on the determined characteristic.

In one embodiment of the invention, the second receiving means further receives evaluation for another communication received from the second person after the communication, and
the providing means determines a characteristic of the second person based on the at least one topic, the response, the evaluation for the response, and the evaluation for the another communication.

In one embodiment of the invention, the second receiving means further receives overall evaluation, which is evaluation for the entire communication,
the at least one topic is a plurality of topics, and
the providing means is configured to:
   compute a degree of effect of the evaluation on the overall evaluation for the plurality of topics; and
   determine the advice based on the determined characteristic and the degree of effect.

In one embodiment of the invention, the providing means is configured to provide the advice to the second person before and/or during the communication.

In one embodiment of the invention, the advice comprises what should be noted by the second person in the communication regarding the at least one topic.

In one embodiment of the invention, the first person is a member in an organization, and the second person is a supervisor of the member.

In one embodiment of the invention, a method for supporting a two-person communication comprises:
receiving at least one topic a first person between two people wishes to discuss in the communication and a response expected from a second person between the two people by the first person in the communication regarding the at least one topic; and
providing an advice for the communication to the second person based on the at least one topic and the response.

In one embodiment of the invention, a program for supporting a two-person communication is executed in a computer system comprising a processing unit, the program causing the processing unit to perform processing comprising:
receiving at least one topic a first person between two people wishes to discuss in the communication and a response expected from a second person between the two people by the first person in the communication regarding the at least one topic; and
providing an advice for the communication to the second person based on the at least one topic and the response.

### [Advantageous Effects of Invention]

The present invention can provide a computer system, method, and program for supporting a two-person communication, whereby the quality of the two-person communication can be improved.

### [Brief Description of Drawings]

[Figure 1A] Figure **1A** is a diagram showing an example of screen **10** notifying an agenda setting request for a one-on-one meeting.
[Figure 1B] Figure **1B** is a diagram showing an example of screen **20** for setting an agenda for a one-on-one meeting.
[Figure 1C] Figure **1C** is a diagram showing an example of screen **30** displayed during a one-on-one meeting between a supervisor and a team staff.
[Figure 2A] Figure **2A** is a diagram showing an example of advice screen **40** displayed during a one-on-one meeting between a supervisor and a team staff.
[Figure 2B] Figure **2B** is a diagram showing an example of screen **50-1** that tallies and displays information obtained from one-on-one meetings between a supervisor and each of a plurality of team staff.
[Figure 2C] Figure **2C** is a diagram showing an example of screen **50-2** that tallies and displays information obtained from one-on-one meetings between a supervisor and each of a plurality of team staff.
[Figure 3A] Figure **3A** is a diagram showing an example of a configuration of computer system **100** for supporting a two-person communication.
[Figure 3B] Figure **3B** is a diagram showing an example of a configuration of processing unit **120**.
[Figure 3C] Figure **3C** is a diagram showing an example of a configuration of processing unit **120**', which is an alternative embodiment of processing unit **120**.
[Figure 4A] Figure **4A** is a diagram showing an example of a data configuration of advices, which are stored in a database unit and can be provided for supporting a two-person communication.
[Figure 4B] Figure **4B** is a diagram showing another example of a data configuration of advices, which are stored in a database unit and can be provided for supporting a two-person communication.
[Figure 5] Figure **5** is a flowchart showing an example of processing **500** performed by computer system **100** for supporting a two-person communication.
[Figure 6] Figure **6** is a flowchart showing an example of another processing **600** performed by computer system **100** for supporting a two-person communication.

### [Description of Embodiments]

### 1. Definition

As used herein, "two people (or two person)" refers to any two people. In one embodiment, "two people" refers to two people with some type of a hierarchical relationship. In this regard, some type of a hierarchical relationship may be, for example, a hierarchical relationship with respect to standing (e.g., supervisor-team staff relationship, teacher-student relationship, etc.), a hierarchical relationship with respect to age (e.g., younger-older relationship, etc.), or a hierarchical relationship based on experience or knowledge (e.g., professional-novice relationship, etc.). A hierarchical relationship based on experience or knowledge can switch in accordance with the reference experience or knowledge. For example, for two people A and B, if A is more knowledgeable than B in a certain field, A can be superior to B, but if B is more knowledgeable than A in another field, B can be superior to A.

As used herein, "first person between two people" refers to one of any two people. In one embodiment, "first person between two people" refers to the subordinate person between two people with some type of a hierarchical relationship. Examples of the "first person between two people" include a team staff in a supervisor-team staff relationship, a student in a teacher-student relationship, a younger person in an older-younger relationship, and a novice in a professional-novice relationship.

As used herein, "second person between two people" refers to other person of any two people. In one embodiment, "second person between two people" refers to the superordinate person between two people with some type of a hierarchical relationship. Examples of the "second person between two people" include a supervisor in a supervisor-team staff relationship, a teacher in a teacher-student relationship, an older person in an older-younger relationship, and a professional in a professional-novice relationship.

As used herein, "two-person communication" refers to a communication held between two people one to one. Examples of "two-person communication" include a communication at work, communication during school life, communication during home life, communication during pastime, and communication in any other field.

The embodiments of the invention are described hereinafter with reference to the drawings.

### 2. Application for supporting a two-person communication

The inventors of the present invention have developed an application for supporting a two-person communication. An application for supporting a two-person communication can improve how each individual engages with the other in a two-person communication. Two people engaging in a communication can each utilize an application for supporting a two-person communication to improve the quality of the communication.

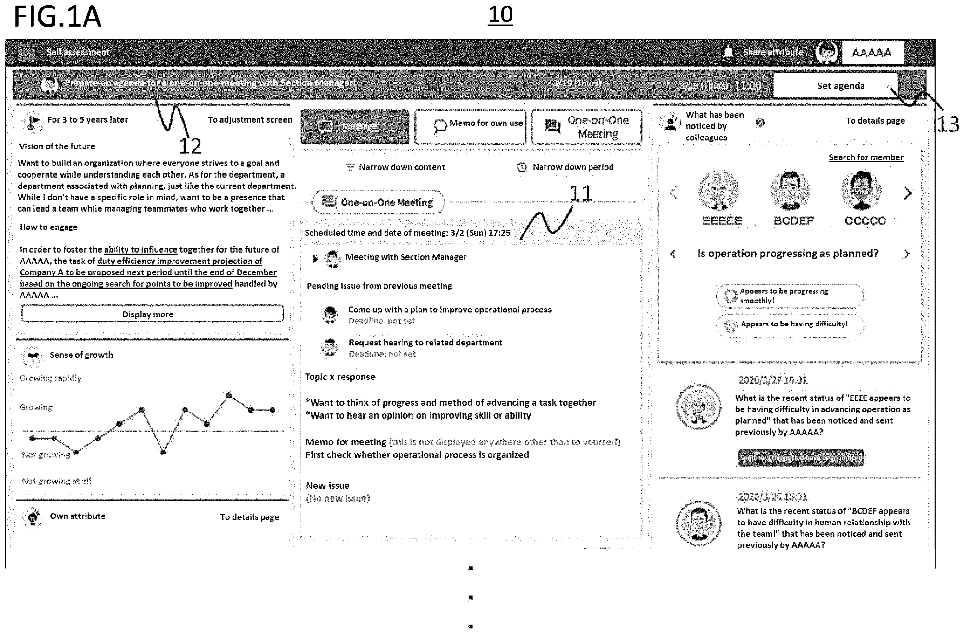

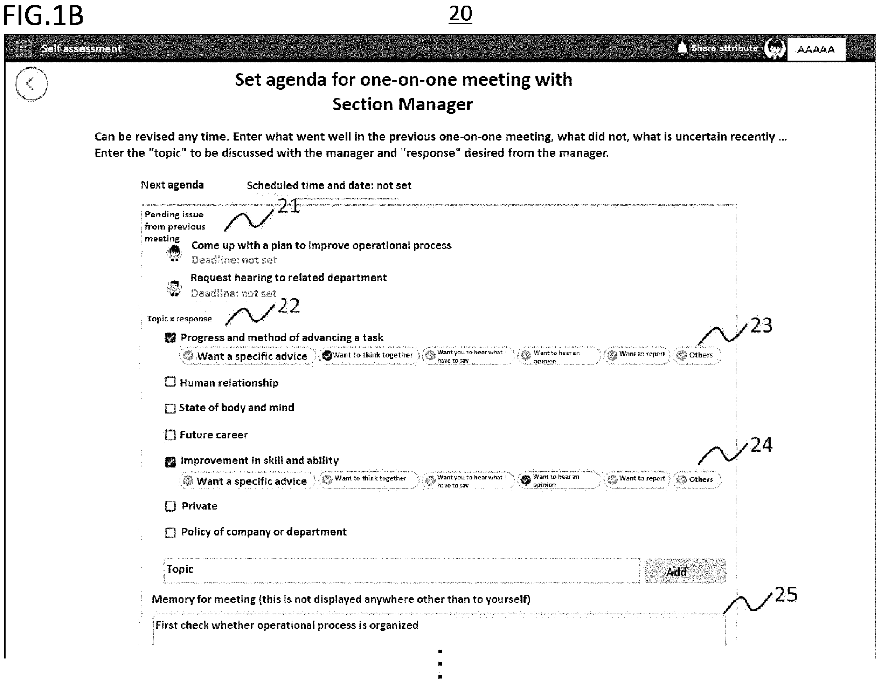

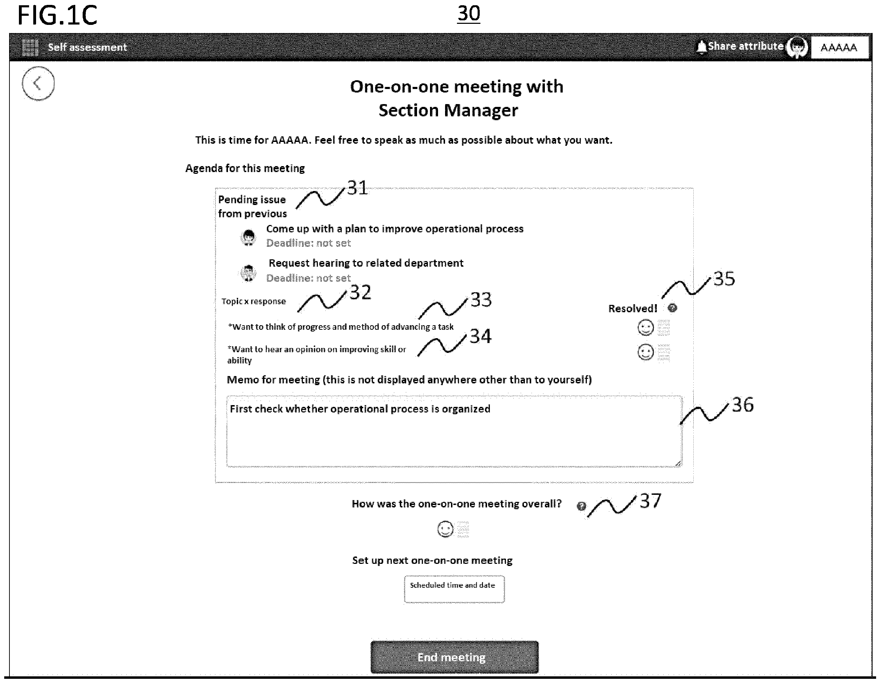

Hereinafter, two people are a supervisor and a team staff. The first person is a team staff (denoted as "AAAAA" in Figures **1** to **2**), and the second person is a supervisor (denoted as "Section Manager" in Figures **1** to **2**). An example in which a team staff and a supervisor engage in a "1-on-1 meeting" and an application for supporting a two-person communication supports the one-on-one meeting is described.

The team staff and the supervisor can utilize an application for supporting a one-on-one meeting by using an information terminal (e.g., smartphone, tablet, personal computer, etc.) to conduct the one-on-one meeting. The application for supporting a one-on-one meeting may be a web application that is available through a web browser, or an application installed on a terminal device.

The application for supporting a one-on-one meeting has a function for managing a one-on-one meeting between the supervisor and the team staff. For example, the supervisor and the team staff can receive a reminder for the one-on-one meeting before the scheduled date by inputting the schedule for the one-on-one meeting. For example, outcomes in the one-on-one meeting accumulate by inputting the outcomes of the one-on-one meeting after the one-on-one meeting, whereby the supervisor and the team staff can reference past outcomes.

Figures **1A** to **1C** show an example of a screen displayed on a display unit of an information terminal used by a team staff.

Figure **1A** shows an example of a screen **10** notifying an agenda setting request for a one-on-one meeting.

On the screen **10**, an agenda setting request display section **12** for a one-on-one meeting is displayed above a one-on-one meeting detail display section **11**.

Details of a one-on-one meeting to be held next are displayed in the one-on-one meeting detail display section **11.** For example, the one-on-one meeting detail display section **11** displays the time and date of the next one-on-one meeting, a pending issue from the previous one-on-one meeting, a topic desired to be discussed and expected response in the next one-on-one meeting, a memo for the next one-on-one meeting, etc. A team staff can prepare for the next one-on-one meeting by looking at the one-on-one meeting detail display section **11**.

An agenda setting request for urging a user to set an agenda for a one-on-one meeting still without a set agenda among the next and subsequent one-on-one meetings is notified in the agenda setting request display section **12**. An agenda setting request is notified, for example, any time before the schedule of the next one-on-one meeting. For example, an agenda setting request can be notified 1 hour, 3 hours, 6 hours, 12 hours, 1 day, 3 days, or 1 week before the next one-on-one meeting. The agenda setting request display section **12** may be configured to display all one-on-one meetings still without a set agenda, or display some, such as the next 1, 2, or 3 one-on-one meetings still without a set agenda. In the example shown in Figure **1A**, a notification to set an agenda for the next and subsequent one-on-one meetings (one-on-one meeting with supervisor Section Manager) is displayed.

The agenda setting request display section **12** comprises a "set" button **13**. When the "set" button is selected, the screen transitions to a screen **20** shown in Figure **1B**.

Figure **1B** shows an example of the screen **20** for setting an agenda for a one-on-one meeting. In the example shown in Figure **1B**, the screen **20** is a screen for setting an agenda for a one-on-one meeting with supervisor Section Manager.

The screen **20** comprises a pending issue display section **21**, a topic input section **22**, and a memo field **25**.

The pending issue display section **21** displays a pending issue from a previous meeting assigned to the team staff. Pending issues such as "Come up with a plan to improve operational process" and "Request a hearing to related departments" are displayed.

A topic (or theme) desired to be discussed in a one-on-one meeting with supervisor Section Manager can be inputted in the topic input section **22**. As used herein, "topic" and "theme" are interchangeably used. For example, a topic may be inputted in a multiple choice format as shown in Figure **1B** or in a free form. Once a topic is inputted, a response input section **23** for discussion of the topic is displayed. For example, the topic may be related to duties, to human relationship, or to the team staff themselves. The topic can be any subject matter that can be discussed in a two-person communication. For example, the topic can be related to studies, career path, relationship with friends, home, etc. in a one-on-one meeting during school life.

A response expected from supervisor Section Manager for a discussion regarding each topic can be inputted in the response input section **23**. For example, an expected response may be inputted in a multiple choice form as shown in Figure **1B** or in a free form. An expected response can be, for example, "Want a specific advice", "Want to think together", "Want you to hear what I have to say", "Want to hear an opinion", "Want to report", etc. For example, an expected response may be a specific action or a specific behavior.

A memo can be freely inputted into the memo field **25**. For example, a memo for own use in a one-on-one meeting can be inputted. Since an inputted memo can be displayed during a one-on-one meeting, a user can also participate in a one-on-one meeting while looking at the memo.

Once a topic and expected response are inputted, agenda setting is completed.

Figure **1C** shows an example of a screen **30** displayed during a one-on-one meeting between a supervisor and a team staff.

The screen **30** comprises a pending issue display section **31**, a topic display section **32**, an individual evaluation input section **35**, a memo field **36**, and an overall evaluation input section **37**.

The pending issue display section **31** displays a pending issue from a previous meeting assigned to the team staff. The displayed pending issue is the same as the pending issue displayed in the pending issue display section **21** on the screen **20**.

The topic display section **32** displays a topic to be discussed in a one-on-one meeting with supervisor Section Manager. The displayed topic is a topic inputted into the topic input section **22** in the screen **20**. For each topic displayed in the topic display section **32**, responses **33** and **34** expected from supervisor Section Manager in discussion of the topic are displayed. The expected response **33** and **34** are the same as responses inputted into the response input section **23** in the screen **20**.

In the example shown in Figure **1B**, "Progress and method of advancing a task" and "Improvement of skill or ability" are selected as topics, and a response of "Want to think together" is expected for a discussion of the topic "Progress and method of advancing a task" and a response of "Want to hear an opinion" is expected for a discussion of the topic "Improvement of skill or ability". Thus, these topics and expected responses are displayed in the example shown in Figure **1C**.

Evaluation for a response by a supervisor for discussion on each topic can be inputted in the individual evaluation input section **35**. The evaluation may be a binary evaluation of whether or not an expected response was given for a discussion on each topic or whether or not an expected response is satisfactory, or a multiary evaluation indicating the degree of satisfaction to an expected response. In the example shown in Figure **1C**, a response by a supervisor for a discussion on each topic is evaluated by a binary evaluation of whether or not the team staff is satisfied from the expected response.

A memo can be freely inputted into the memo field **36**, or a memo inputted in the memo field **25** in the screen **20** is displayed.

Overall evaluation, which is evaluation of the entire one-on-one meeting with supervisor Section Manager, can be inputted in the overall evaluation input section **37**. For example, the overall evaluation may be a binary evaluation such as whether or not the one-on-one meeting was satisfactory or a multiary evaluation indicating the degree of satisfaction for the one-on-one meeting. In the example shown in Figure **1C**, the one-on-one meeting with supervisor Section Manager is given a binary evaluation of whether or not the one-on-one meeting was meaningful.

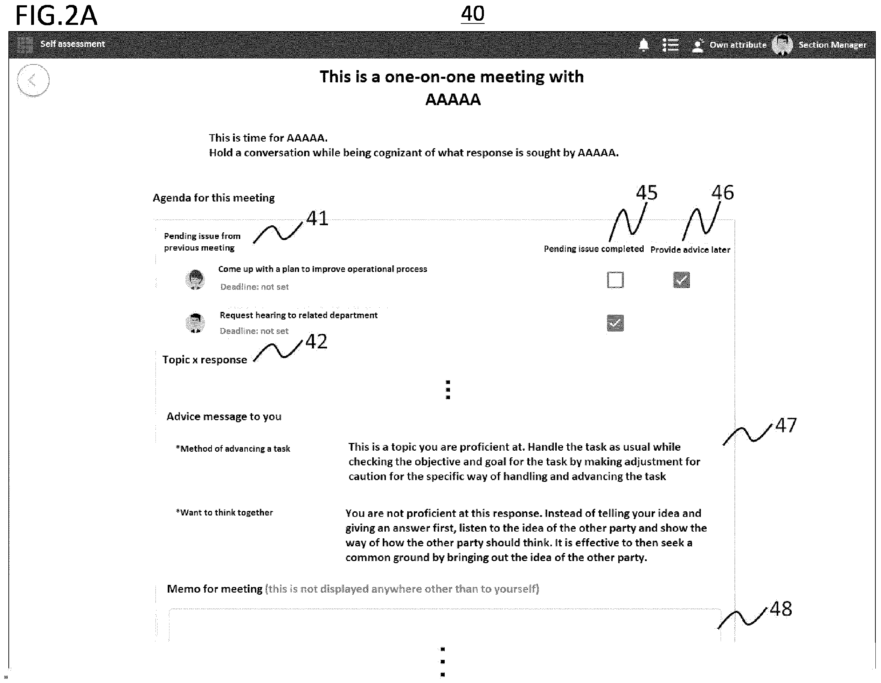

Figures **2A** to **2B** show an example of a screen displayed on a display unit of an information terminal used by a supervisor.

Figure **2A** shows an example of an advice screen **40** displayed during a one-on-one meeting between a supervisor and a team staff. An advice to the supervisor in the one-on-one meeting is displayed on the advice screen **40**. An advice displayed on the advice screen **40** comprises an advice message showing what should be noted in the one-on-one meeting, etc., and information on what topic is desired and what response is expected by the team staff in the one-on-one meeting. For example, the supervisor can be aware of what should be noted in the one-on-one meeting and strive to improve the quality of the one-on-one meeting based on the presented information.

The screen **40** comprises a pending issue display section **41**, a topic display section **42**, a first checkbox **45**, a second checkbox **46**, an advice message display section **47**, and a memo field **48**.

A pending issue from a previous meeting assigned to the team staff is displayed in the pending issue display section **41**. The displayed pending issue is the same as the pending issue displayed in the pending issue display section **21** in the screen **20**.

A topic desired to be discussed in a one-on-one meeting by the team staff with supervisor Section Manager is displayed in the topic display section **42** (the content thereof is omitted in Figure **2A**). The displayed topic is a topic inputted into the topic input section **22** in the screen **20** by the team staff. For each topic displayed in the topic display section **42**, a response expected from supervisor Section Manager by the team staff in a discussion on the topic is displayed. The expected response is the same as the response inputted into the response input section **23** in the screen **20** by the team staff.

In the example shown in Figure **1B**, "Progress and method of advancing a task" and "Improvement of skill or ability" are selected as topics, and a response of "Want to think together" is expected for a discussion on the topic "Progress and method of advancing a task" and a response of "Want to hear an opinion" is expected for a discussion on the topic "Improvement of skill or ability". Thus, these topics and expected responses are displayed in the topic display section **42**.

The supervisor can engage in a one-on-one meeting by checking the topic desired to be discussed and expected response by the team staff during the one-on-one meeting, whereby the supervisor can communicate with the team staff in the one-on-one meeting in accordance with the desire and expectation of the team staff. This can then lead to a high quality two-person communication.

A check indicating completion of a pending issue displayed in the pending issue display section **41** can be inputted into the first checkbox **45**. The first checkbox **45** is displayed for each pending issue. For example, in a one-on-one meeting, the supervisor can input a check into the first checkbox **45** when it is determined that a pending issue assigned to the team staff has been completed.

A check for indicating a flag for giving an advice to the team staff later can be inputted into the second checkbox **46**. The second checkbox **46** is displayed for each pending issue. The second checkbox **46** may be displayed for each topic. For example, the supervisor can input a check into the checkbox **46** when the supervisor has decided to give an advice later for a pending issue assigned to the team staff in a one-on-one meeting. For example, a check can be inputted into the checkbox **46** when the supervisor has decided to give an advice later for a topic the team staff wishes to discuss in a one-on-one meeting.

An advice message for the supervisor is displayed in the advice message display section **47**. An advice message includes what should be noted by the supervisor in a one-on-one meeting. For example, an advice message may be displayed for each topic the team staff wishes to discuss. For example, in the example shown in Figure **2A**, an advice message of "This is a topic you are proficient at. Handle the task as usual while checking the objective and goal for the task by making adjustment for caution for the specific way of handling and advancing the task" is displayed for a discussion on the topic "Progress and method of advancing a task". For example, an advice message may be displayed for each response expected by the team staff. For example, in the example shown in Figure **2A**, an advice message of "You are not proficient at this response. Instead of telling your idea and giving an answer first, listen to what the other party is thinking and show the way of how the other party should think. It is effective to then seek a common ground by bringing out what the other party is thinking" is displayed for a response of "Want to think together". An advice message may be uniform for each supervisor, or an individualized advice determined based on a characteristic of each supervisor.

A supervisor can engage in a one-on-one meeting by checking what should be noted in the one-on-one meeting with a team staff during the one-on-one meeting, whereby the supervisor can communicate with the team staff in the one-on-one meeting while being cognizant of a communication to be had. This then leads to a high quality two-person communication.

A memo can be freely inputted in the memo field **48**. For example, what is noticed during a one-on-one meeting can be inputted into the memo field **48** to communicate this to the team staff without omission.

After completion of a one-on-one meeting, the supervisor can check the first checkbox **45**, the second checkbox **46**, and the memo field **48** in the screen **40** and give an additional advice or supplementary comment to the team staff.

Information inputted into the screen **20**, screen **30**, or screen **40** is accumulated in an application for supporting a one-on-one meeting and is utilized in subsequent one-on-one meetings. Subsequent one-on-one meetings may be a one-on-one meeting between team staff "AAAAA" and supervisor "Section Manager", a one-on-one meeting between team staff "AAAAA" and another supervisor, a one-on-one meeting between another team staff and supervisor "Section Manager", or a one-on-one meeting between another team staff and another supervisor.

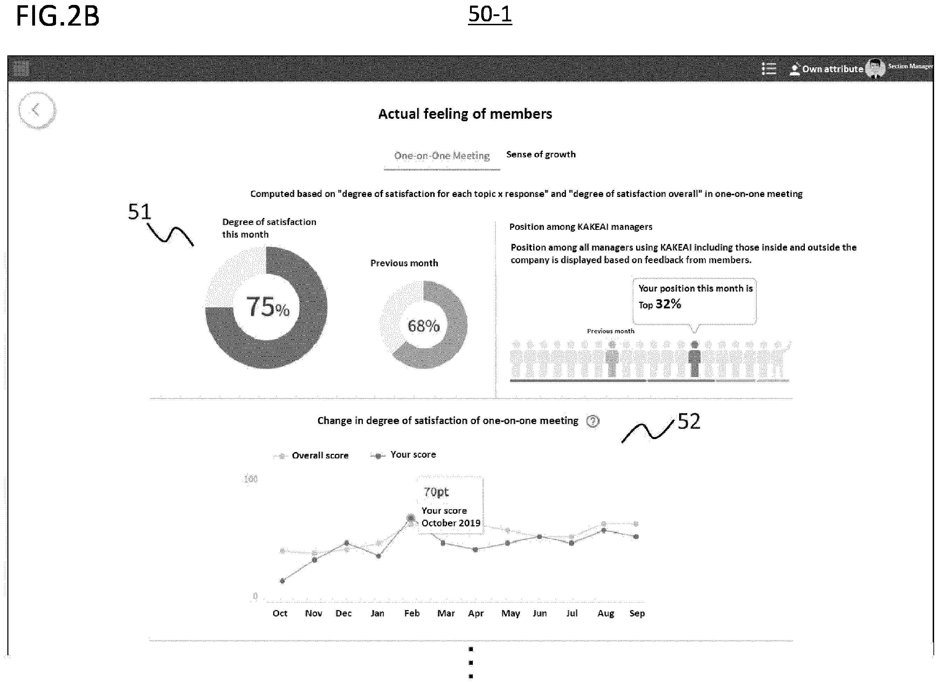

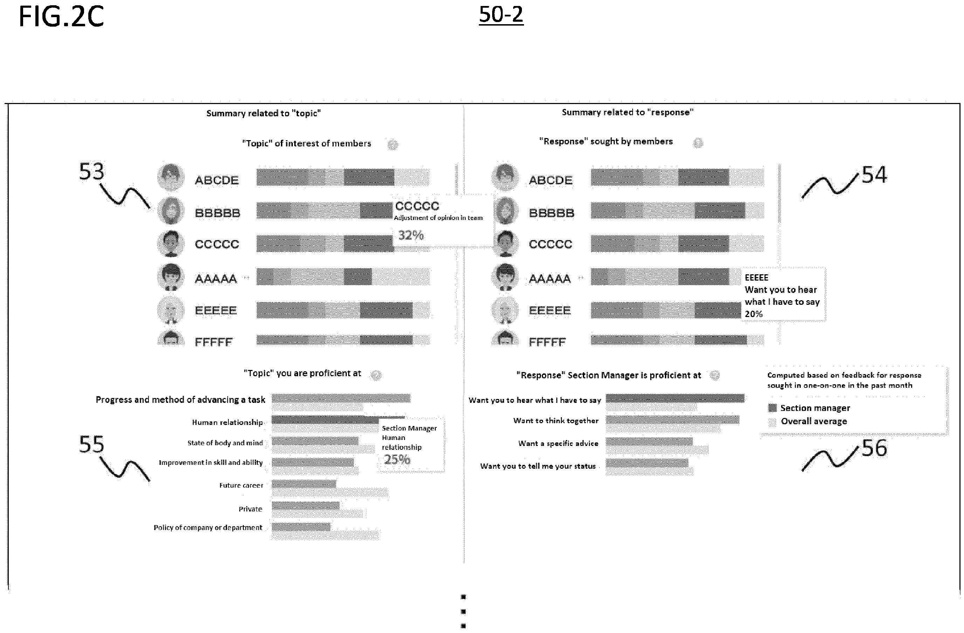

Figures **2B** and **2C** show an example of screens **50-1** and **50-2** that tally and display information obtained from one-on-one meetings between the supervisor and each of a plurality of team staff. The screens **50-1** and **50-2** may be configured so that the screen **50-2** is displayed when the screen **50-1** is scrolled down, or may be configured to be displayed as separate screens.

In Figure **2B**, the screen **50-1** comprises a degree of satisfaction display section **51** and a change in degree of satisfaction display section **52**.

The degree of satisfaction display section **51** shows the degree of satisfaction of a plurality of team staff for a one-on-one meeting with the supervisor. A value closer to 100% represents higher satisfaction by the plurality of team staff.

The change in degree of satisfaction display section **52** displays the change in the degree of satisfaction displayed in the degree of satisfaction display section **51** over time. In the example shown in Figure **2B**, the change in the average degree of satisfaction for a one-on-one meeting over time of the entire organization (indicated by a light colored line) and the change in the degree of satisfaction for a 1 one 1 meeting with the supervisor (indicated by a dark colored line) are shown.

In Figure **2C**, the screen **50-2** comprises an interested topic display section **53**, a desired response display section **54**, a proficient topic display section **55**, and a proficient response display section **56**.

A topic (or theme) of interest of each of a plurality of team staff (members) is displayed in the interested topic display section **53** as a bar graph, whereby the supervisor can visually grasp what topic each team staff is interested in.

A response requested by each of the plurality of team staff (members) is displayed in the desired response display section **54** as a bar graph, whereby the supervisor can visually grasp what response each team staff is expecting.

The degree of proficiency of the supervisor for each topic (or each theme) is displayed in the proficient topic display section **55** as a bar graph. In the proficient topic display section **55**, a larger graph indicates more proficiency in a topic by the supervisor. In the example shown in Figure **2C**, the average degree of proficiency of all supervisors within an organization (indicated by a light colored graph) and the degree of proficiency of the supervisor (indicated by a dark colored graph) are displayed, whereby the supervisor can visually grasp what topic the supervisor is proficient at.

The degree of proficiency of the supervisor for each of a plurality of responses expected from a team staff is displayed in the proficient response display section **56**. In the proficient response display section **56**, a larger graph indicates that the supervisor has greater proficient in the response. The example shown in Figure **2C** displays the average degree of proficiency of all supervisors within an organization (indicated by a light colored line) and the degree of proficiency of the supervisor (indicated by a dark colored line), whereby the supervisor can visually grasp what response the supervisor is proficient at.

The supervisor can check the outcomes of their own one-on-one meeting from information displayed on the screens **50-1** and **50-2** and utilize the outcomes in the next one-on-one meeting. For example, the supervisor can think of how the supervisor should act in a one-on-one meeting from the level of the degree of proficiency for each topic. For example, the supervisor can determine an effect of a response in a one-on-one meeting with a team staff from match or mismatch between a topic of interest of the team staff and a topic that the supervisor is proficient at to think of how the supervisor should act in a one-on-one meeting.

Alternatively, an application for supporting a one-on-one meeting may be configured to deduce, and present to the supervisor, how the supervisor should act in a one-on-one meeting, which team staff the supervisor is able to/unable to effectively respond to in a one-on-one meeting, what topic the supervisor is proficient or non-proficient at/what response is expected from the supervisor in a one-on-one meeting, etc. based on information obtained from a one-on-one meeting between the supervisor and each of a plurality of team staff.

The aforementioned examples describe that the screen **30** or **40** is displayed on each of an information terminal of a team staff and an information terminal of the supervisor during a one-on-one meeting, but these screens may be configured to be displayed on the information terminal of the team staff and the information terminal of the supervisor before the one-on-one meeting, whereby the supervisor can, for example, be aware of the desire and expectation of the team staff and sufficiently prepare in advance before the one-on-one meeting.

While the aforementioned examples describe an example of supporting a one-on-one meeting between a supervisor and a team staff, communications to be supported by the invention are not limited to a one-on-one meeting between a supervisor and a team staff. The present invention can support any one-on-one communication between any two people, as long as at least one topic desired to be discussed in a communication by one of the two people and a response expected from the other person of the two people by the one of the two people in a communication regarding said topic are determined in advance. Examples of such a communication include, but are not limited to, a communication between manager A (supervisor) of a company and manager B (supervisor) of another company for manager A to learn how to effectively bring out the talent of a team staff from manager B, communication between member C (team staff) of a company and manager D (supervisor) of another company for member C to learn how to smoothly conduct a meeting or how to build a future career from manager D, communication between high school student E and college student F for student E to learn how to effectively study for a test from student F, communication between a certain person G and expert H or person I with knowledge/experience for person G to learn from H or I to improve their skill or as a lesson, etc.

An application for supporting a two-person communication described above may be implemented by, for example, a computer system for supporting a two-person communication described below. A computer system for supporting a two-person communication can improve how each individual engages with the other in a two-person communication.

### 3. Configuration of a computer system for supporting a two-person communication

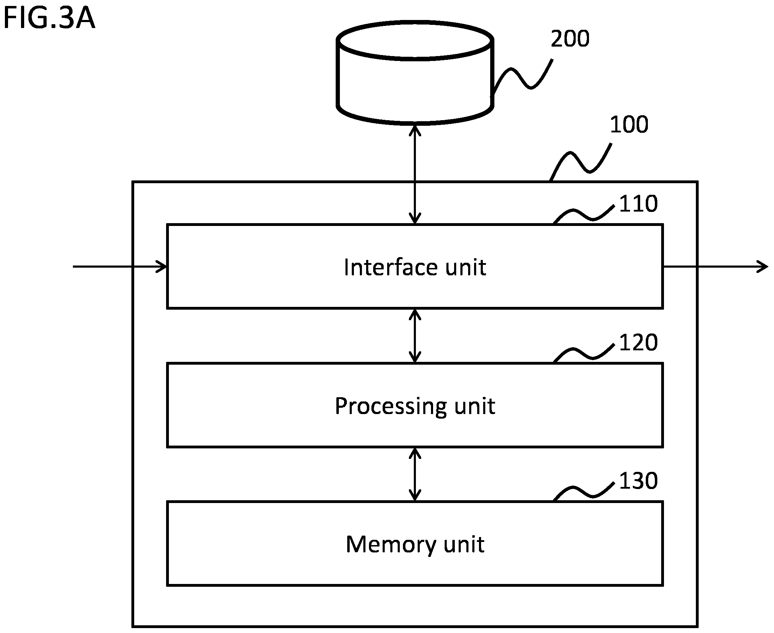

Figure **3A** shows an example of a configuration of the computer system **100** for supporting a two-person communication.

The computer system **100** may be, for example, a computer system installed at a service provider (i.e., server) or a computer system used by a user (e.g., user device). Hereinafter, a computer system installed at a service provider is used as an example for the description.

The computer system **100** comprises an interface unit **110**, a processing unit **120**, and a memory unit **130**. The computer system **100** is connected to a database unit **200**.

The interface unit **110** exchanges information with an element that is external to the computer system **100**. The processing unit **120** of the computer system **100** can receive information from an element that is external to the computer system **100** via the interface unit **110** and transmit information to an element that is external to the computer system **100**. The interface unit **110** can exchange information in any form. An information terminal used by a first person and an information terminal used by a second person can communicate with the computer system **100** via the interface unit **110**.

The interface unit **110** comprises, for example, an input unit that enables input of information into the computer system **100**. The input unit can enable input of information into the computer system **100** in any mode. If, for example, the input unit is a touch panel, the input unit may be configured so that a user inputs information by touching the touch panel. Alternatively, if the input unit is a mouse, the input unit may be configured so that a user inputs information by operating the mouse. Alternatively, if the input unit is a keyboard, the input unit may be configured so that a user inputs information by pressing a key on the keyboard. Alternatively, if the input unit is a microphone, the input unit may be configured so that a user inputs information by inputting an audio into the microphone. Alternatively, if the input unit is a camera, the input unit may be configured so that information captured by the camera is inputted. Alternatively, if the input unit is a data reader, the input unit may be configured so that information is inputted by reading out information from a storage medium connected to the computer system **100**. Alternatively, if the input unit is a receiver, information may be inputted by the receiver receiving the information from an element that is external to the computer system **100** via a network. In such a case, the network can be any type of network. For example, a receiver may receive information via the Internet, or via a LAN.

The interface unit **110** comprises, for example, an output unit that enables output of information from the computer system **100**. The output unit can enable output of information from the computer system **100** in any mode. If, for example, the output unit is a display screen, the output unit may be configured so that information is outputted to the display screen. Alternatively, if the output unit is a speaker, the output unit may be configured so that information is outputted by audio from the speaker. Alternatively, if the output unit is a data writer, the output unit may be configured so that information is outputted by writing information on a storage medium connected to the computer system **100**. Alternatively, if the output unit is a transmitter, the transmitter may output information by transmitting the information to an element that is external to the computer system **100** via a network. In such a case, the network can be any type of network. For example, a transmitter may transmit information via the Internet, or via a LAN.

The processing unit **120** executes processing of the computer system **100** and controls the overall operation of the computer system **100**. The processing unit **120** reads out a program stored in the memory unit **130** and executes the program, which can cause the computer system **100** to function as a system executing desired steps. The processing unit **120** may be implemented by a single processor or a plurality of processors.

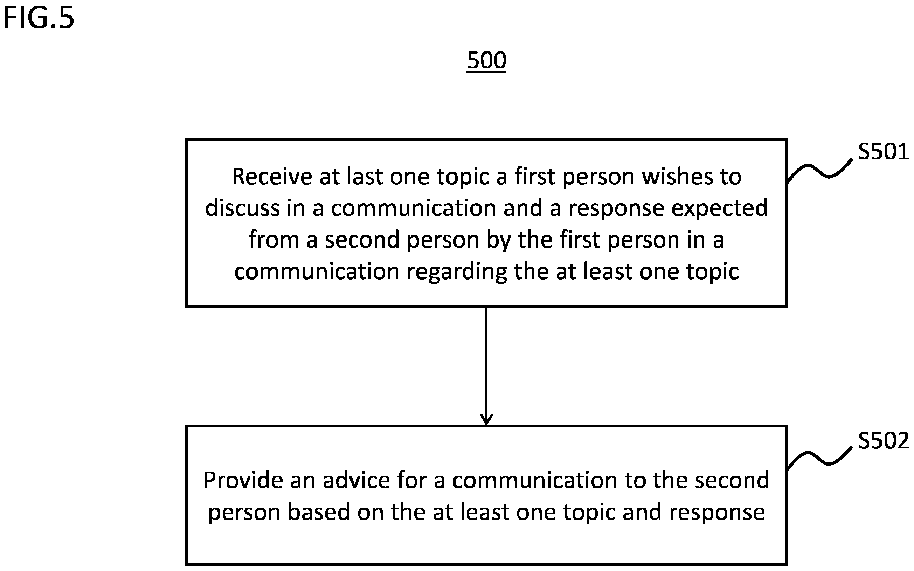

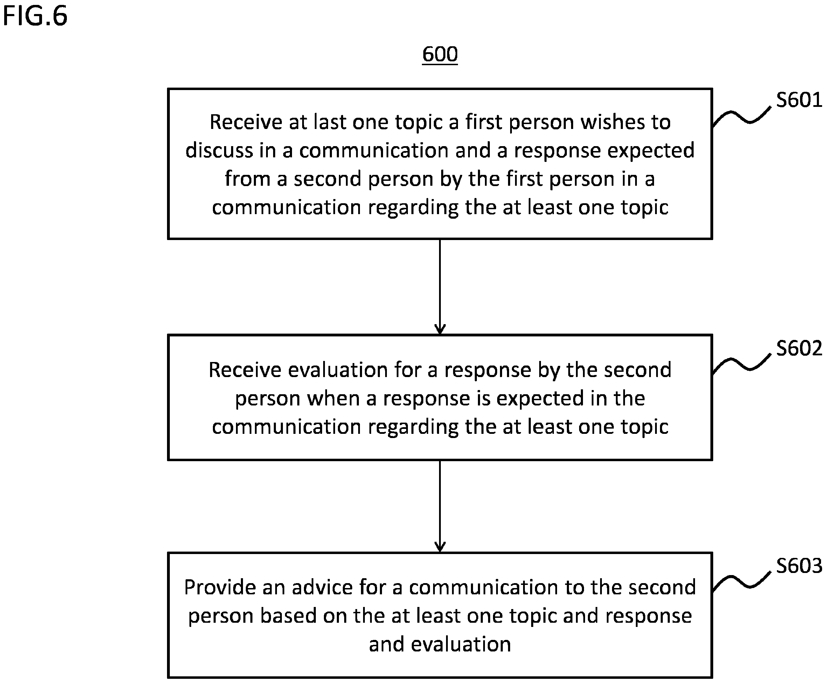

The memory unit **130** stores a program that is required for executing the processing of the computer system 100, data required for executing the program, etc. The memory unit **130** may store a program for causing the processing unit **120** to perform processing for supporting a two-person communication (e.g., program materializing the processing shown in Figure **5** or **6** described below). In this regard, a program can be stored in the memory unit **130** in any manner. For example, a program may be preinstalled in the memory unit **130**. Alternatively, a program may be installed in the memory unit **130** by downloading via a network. In such a case, the network can be any type of network. The memory unit **130** can be implemented by any storing means.

The database unit **200** stores various types of information that can be utilized for supporting a two-person communication.

The database unit **200** can store evaluation of a second person. Evaluation of a second person can be provided by one or more people that can have a two-person communication with the second person. Evaluation of a second person can be transmitted to the computer system **100** from an information terminal used by one or more people that can have a two-person communication with the second person and stored in the database unit **200**.

In one embodiment, evaluation of a second person comprises evaluation for a response by the second person in a two-person communication regarding a topic. For example, this corresponds to evaluation inputted in the individual evaluation input section **35** in the example shown in Figure **1C**. Evaluation for a response may be, for example, binary evaluation such as whether or not a response by a second person was satisfactory or whether or not a second person provided an expected response, multiary evaluation indicating the degree of satisfaction for an expected response, or scores.

In one embodiment, evaluation of a second person comprises evaluation for another communication received from the second person after a two-person communication instead of or in addition to the evaluation described above. For example, another communication received from a second person after a two-person communication includes evaluation for an advice, or supplementary comment communicated, provided by the second person to a first person after a two-person communication. Evaluation for another communication may be binary evaluation such as whether or not another communication received from a second person after a two-person communication with the second person was satisfactory, multiary evaluation indicating the degree of satisfaction for the another communication, or scores.

In one embodiment, evaluation of a second person includes an overall evaluation, which is evaluation for the entire two-person communication instead of or in addition to the evaluation described above. For example, this corresponds to evaluation inputted into the overall evaluation input section **37** in the example shown in Figure **1C**. Overall evaluation may be, for example, binary evaluation such as whether or not a two-person communication with the second person was satisfactory, multiary evaluation indicating the degree of satisfaction for a two-person communication with the second person, or scores.

Evaluation of a second person may be stored in the database unit **200** while being associated with a characteristic of the second person.

For example, evaluation for a response of a second person in a two-person communication regarding a topic can be stored in the database unit **200** while being associated with a characteristic of the second person, whereby the characteristic of the second person can be determined from the evaluation for a response of the second person in a two-person communication regarding a topic.

For example, evaluation for another communication received from a second person after a two-person communication can be stored, instead of or in addition to the evaluation described above, while being associated with a characteristic of the second person in the database **200**, whereby the characteristic of the second person can be determined from evaluation for another communication received from the second person, or evaluation for a response of the second person in a two-person communication regarding a topic and evaluation for another communication received from the second person.

For example, overall evaluation of a two-person communication can be stored, instead of or in addition to the evaluation described above, while being associated with a characteristic of the second person in the database **200**, whereby the characteristic of the second person can be determined from the overall evaluation of a two-person communication, evaluation for a response of the second person in a two-person communication regarding a topic and overall evaluation of a two-person communication, evaluation for another communication received from the second person and overall evaluation of a two-person communication, or evaluation for a response of the second person in a two-person communication regarding a topic, evaluation for another communication received from the second person, and overall evaluation of a two-person communication.

A characteristic of a second person determined by the computer system **100** for supporting a two-person communication can be stored in the database unit **200**. The database **200** can stored a characteristic for a plurality of people, whereby a characteristic of a second person can be compared with a characteristic of another person. For example, a characteristic of a second person who is in a position of a supervisor within an organization can be compared with a characteristic of another person who is in a position of a supervisor within the organization.

Advices that can be provided for supporting a two-person communication are stored in the database unit **200**. Advices that can be provided can be stored while being associated with, for example, a topic and a response expected in a communication regarding the topic. Alternatively, advices that can be provided can be stored while being associated with, for example, a topic, a response expected in a communication regarding the topic, and evaluation for a response when the response is expected. Alternatively, advices that can be provided can be stored while being associated with, for example, a topic, a response expected in a communication regarding the topic, evaluation for a response when the response is expected, and evaluation for another communication received from a second person after a two-person communication. Alternatively, advices that can be provided can be stored while being associated with a characteristic of a person to be provided with an advice.

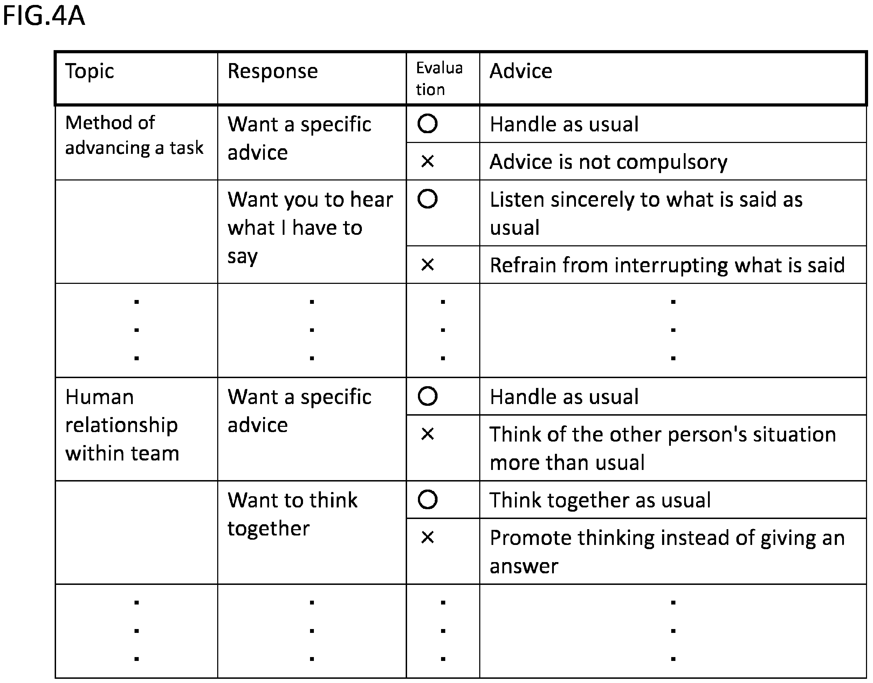

Figure **4A** shows an example of a data configuration of advices, which are stored in a database unit and can be provided for supporting a two-person communication.

An advice that can be provided for supporting a two-person communication is stored while being associated with a topic, a response expected in a communication regarding the topic, and evaluation for a response when the response is expected.

For example, "Handle the task as usual" is stored as an advice for a two-person communication expected of a response of "Want a specific advice" in a communication regarding the topic of "Method of advancing a task" for a person with excellent evaluation (o) for a response when the response of "Want a specific advice" is expected in a communication regarding the topic of "Method of advancing a task", and "Advice is not compulsory" is stored as an advice for a two-person communication expected of the response of "Want a specific advice" in a communication regarding the topic of "Method of advancing a task" for a person with poor evaluation (x) for a response when the response of "Want a specific advice" is expected in a communication regarding the topic of "Method of advancing a task".

For example, "Listen sincerely to what is said as usual" is stored as an advice for a two-person communication expected of the response of "Want you to hear what I have to say" in a communication regarding the topic of "Method of advancing a task" for a person with excellent evaluation (o) for a response when the response of "Want you to hear what I have to say" is expected in a communication regarding the topic of "Method of advancing a task", and "Refrain from interrupting what is said" is stored as an advice for a two-person communication expected of the response of "Want you to hear what I have to say" in a communication regarding the topic of "Method of advancing a task" for a person with poor evaluation (x) for a response when the response of "Want you to hear what I have to say" is expected in a communication regarding the topic of "Method of advancing a task".

In this manner, advices in accordance with excellent/poor evaluation for a response in a communication regarding a certain topic are stored in the database unit **200**, whereby an advice associated with excellent evaluation is provided to a person with excellent evaluation for an expected response and an advice associated with poor evaluation is provided to a person with poor evaluation for an expected response.

The aforementioned examples describe an example where an advice is associated with binary evaluation of whether a response was excellent or poor, but the present invention is not limited thereto. For example, an advice may be associated with each evaluation of multiary evaluation, or associated with each score of score evaluation.

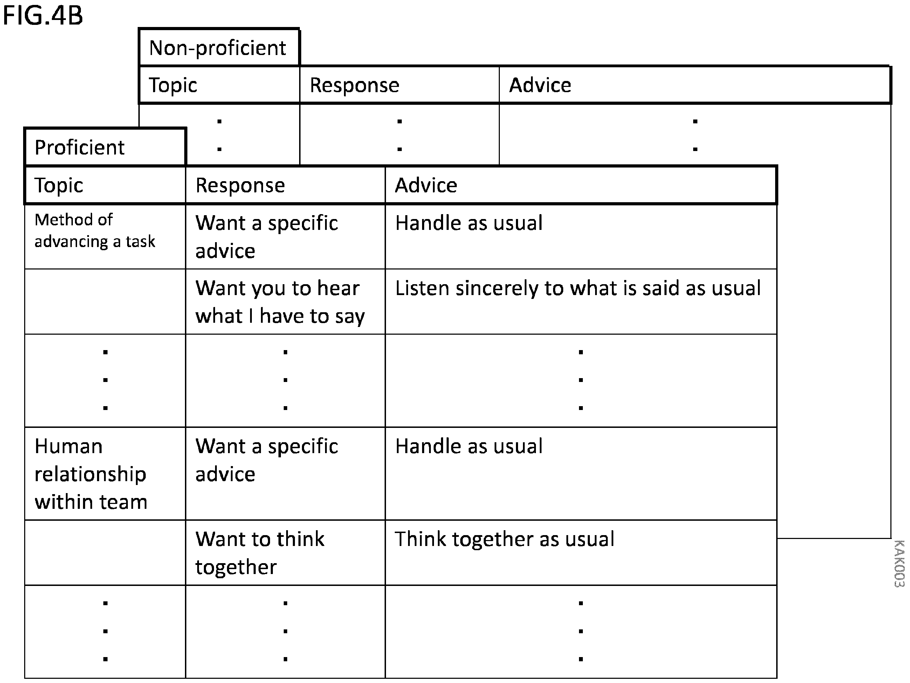

Figure **4B** shows another example of a data configuration of advices, which are stored in a database unit and can be provided for supporting a two-person communication.

An advice that can be provided for supporting a two-person communication is stored while being associated with a characteristic of a person that is provided with the advice. Specifically, such an advice is stored while being associated with a characteristic related to a topic and a response expected in a communication regarding the topic (i.e., proficient or not proficient in a specific response expected in a communication regarding the topic).

For example for "proficient" responses, "Handle as usual" is stored as an advice for a two-person communication expected of the response of "Want a specific advice" in a communication regarding the topic of "Method of advancing a task" for a person proficient at a response when the response of "Want a specific advice" is expected in a communication regarding the topic of "Method of advancing a task", and "Listen sincerely to what is said as usual" is stored as an advice for a two-person communication expected of the response of "Want you to hear what I have to say" in a communication regarding the topic of "Method of advancing a task" for a person proficient at a response when the response of "Want you to hear what I have to say" is expected in a communication regarding the topic of "Method of advancing a task". An advice is stored in the same manner for "non-proficient" responses.

In this manner, advices in accordance with whether proficient or non-proficient at a response in a communication regarding a certain topic are stored in the database unit **200**, whereby an advice associated with a proficient response is provided to a person who is "proficient" at an expected response, and an advice associated with a non-proficient response is provided to a person who is "non-proficient" at an expected response.

Advices stored in the database **200** may be stored while being associated with, for example, an attribute of an organization. For example, advices for a company stored in the database unit **200** can be stored after categorizing the advices into advices for an organization in a primary industry, advices for an organization in a secondary industry, and advices for an organization in a tertiary industry. For example, advices for students stored in the database **200** can be stored after categorizing the advices into advices for an organization of elementary school students, advices for an organization of middle school students, advices for an organization of high school students, and advices for an organization of college students, whereby different advices can be provided for organizations with different attributes.

Advices can be stored in the database **200** at any timing in the present invention. Advices may be stored, for example, in advance in the database unit **200** by a service provider providing a service for supporting a two-person communication. Alternatively, advices may be stored, for example, by an input by a user corresponding to a second person during the operation of service by utilizing the computer system **100**. This may be configured, for example, to ask users who are proficient at a response when a certain response is expected in a communication regarding a topic to enter what they are usually cognizant of, and store the input in the database unit **200** as an advice, where the advice can be stored in the database unit **200** while being associated with, for example, a topic, an expected response, and "proficiency". Such an advice can be provided to a second person (e.g., supervisor, teacher, etc.) as, for example, "Just imitate the communication of another supervisor with a team staff", "Just imitate the communication of another teacher with a student", etc.

In the example shown in Figure **3A**, the database unit **200** is provided external to the computer system **100**, but the present invention is not limited thereto. The database unit **200** can also be provided inside the computer system **100**. At this time, the database unit **200** may be implemented by the same storing means as the storing means implementing the memory unit **130**, or by storing means that is different from the storing means implementing the memory unit **130**. In either case, the database unit **200** is configured as a storing unit for the computer system **100**. The configuration of the database unit **200** is not limited to a specific hardware configuration. For example, the database unit **200** may be configured as a single hardware part, or as a plurality of hardware parts. For example, the database unit **200** may be configured as an external hard disk apparatus of the computer system **100** or as a storage on the cloud connected via a network.

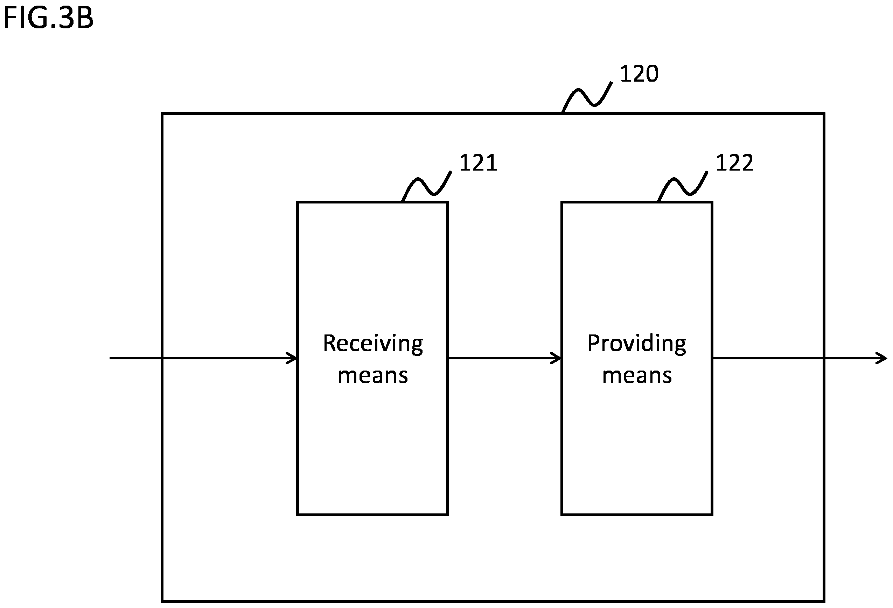

Figure **3B** shows an example of the configuration of the processing unit **120**.

The processing unit **120** comprises receiving means **121** and providing means **122**.

The receiving means **121** is configured to receive information from the interface unit **110**.

The receiving means **121** is configured to receive at least one topic a first person desires to discuss in a two-person communication and a response expected from a second person by the first person in a communication regarding the at least one topic. The receiving means **121** may receive, for example, at least one topic inputted into the computer system **100** via the interface unit **110** and an expected response from the interface unit **110**.

At least one topic and expected response can be inputted into the computer system **100** via the interface unit **110** from an information terminal used by a first person. For example, when a first person inputs a topic and an expected response in the topic input section **22** and the response input section **23** on the screen **20** shown in Figure **1B** prior to a two-person communication with a second person, the inputted topic and expected response are inputted into the computer system **100** via the interface unit **110**, and the receiving means **121** receives the topic and expected response from the interface unit **110**.

The providing means **122** is configured to provide an advice for a two-person communication to a second person based on at least one topic and response received by the receiving means **121**. The providing means **122** may be configured to provide information directly obtained from at least one topic and response received by the receiving means **121** (i.e., information comprising at least one topic and response received from the receiving means **121**) as an advice, or to provide information indirectly obtained from at least one topic and response received by the receiving means **121** (e.g., information deduced from the database unit **200** based on at least one topic and response received by the receiving means **121**) as an advice.

The providing means **122** can provide an advice to a second person via the interface unit **110**. In this regard, an advice can be provided in any manner. For example, the providing means may be configured to transmit an advice to an information terminal used by a second person and display the advice on a screen of the information terminal, or to output the advice as a voice from a microphone of the information terminal.

The providing means **122** may, for example, provide an advice to a second person prior to a two-person communication or provide an advice to a second person during a two-person communication.

In one embodiment, the providing means **122** provides information comprising at least one topic and response to a second person, whereby the second person can be aware of what topic a first person wishes to discuss in a two-person communication and what response is expected, so that the second person can strive to improve the quality of the two-person communication. For example, a second person can be aware of what topic a first person wishes to discuss in a two-person communication and what response is expected prior to the two-person communication to prepare for the two-person communication.

In one embodiment, the providing means **122** provides an advice determined based on at least one topic and response to a second person. For example, the providing means **122** draws out an advice, which is stored while being associated with at least one topic and response, from the database unit **200** and provides the advice to a second person. An advice can be, for example, a message indicating what should be noted in a two-person communication, etc., whereby the second person can be aware of what should be done to respond to the desire and expectation of a first person and strive to improve the quality of the two-person communication. For example, a second person can be aware of what should be done to respond to the desire and expectation of a first person prior to a two-person communication to prepare for the two-person communication.

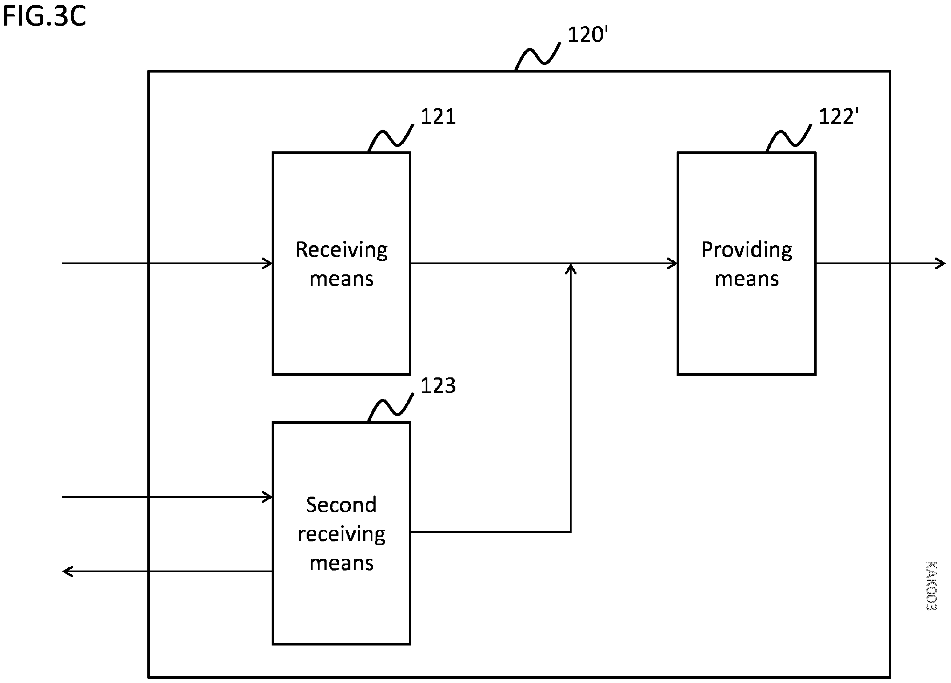

Figure **3C** shows an example of a configuration of a processing unit **120**', which is an alternative embodiment of the processing unit **120**.

The processing unit **120**' comprises receiving means **121**, providing means **122**', and second receiving means **123**.

The receiving means **121** is the same as the receiving means **121** described in reference to Figure **3B**, so that the explanation thereof is omitted.

The second receiving means **123** is configured to receive information from the interface unit **110**.

The second receiving means **123** is configured to receive evaluation for a response of a second person when a certain response is expected from the second person in a communication regarding at least one topic. The second receiving means **123** may, for example, receive evaluation inputted into the computer system **100** via the interface **110** from the interface unit **110**.

In a two-person communication supported by the computer system **100**, at least one topic is set, and a second person is expected of a specific response in a communication regarding said topic, as described above. Accordingly, the second person responds in a manner that can meet the expectation in the two-person communication. A response therein is evaluated by the other party in the two-person communication. The other party may be a first person or a person other than the first person. However, the person other than the first person must be a person with some type of a hierarchical relationship with the second person, who can have a two-person communication with the second person, just like the first person.

Evaluation for a response by a second person when a certain response is expected from the second person in a communication regarding at least one topic can be inputted into the computer system **100** via the interface unit **110** from an information terminal used by a first person. For example, when a first person inputs evaluation for an expected response into the individual evaluation input section **35** in the screen **30** shown in Figure **1C** during or after a two-person communication with a second person, and the inputted evaluation is inputted into the computer system **100** via the interface unit **110**, and the second receiving means **123** receives the evaluation from the interface unit **110**.

Evaluation for a response by a second person when a certain response is expected from the second person in a communication regarding at least one topic can be inputted into the computer system **100** via the interface unit **110** from an information terminal used by a person other than a first person. For example, when the person other than the first person inputs evaluation for an expected response into the individual evaluation input section **35** in the screen **30** shown in Figure **1C** during or after a two-person communication with the second person, the inputted evaluation is inputted into the computer system **100** via the interface unit **110**, and the second receiving means **123** receives the evaluation from the interface unit **110**.

The second receiving means **123** can be further configured to receive an overall evaluation, which is evaluation of the entire two-person communication. The second receiving means **123** may, for example, receive overall evaluation inputted into the computer system **100** via the interface unit **110** from the interface unit **110**.

As described above, after completion of a two-person communication, the two-person communication with a first person is evaluated by the other party of the two-person communication. The other party may be the first person or a person other than the first person. However, the person other than the first person must be a person with some type of a hierarchical relationship with the second person, who can have a two-person communication with the second person, just like the first person.

Overall evaluation of a two-person communication can be inputted into a computer system **100** via the interface unit **110** from an information terminal used by a first person. For example, when a first person inputs an overall evaluation for a one-on-one meeting into the overall evaluation input section **37** in the screen **30** shown in Figure **1C** during or after a two-person communication with a second person, the inputted overall evaluation is inputted into the computer system **100** via the interface unit **110**, and the second receiving means **123** receives the overall evaluation from the interface unit **110**.

Overall evaluation of a two-person communication can be inputted into the computer system **100** via the interface unit **110** from an information terminal used by a person other than a first person. For example, when the person other than the first person inputs an overall evaluation for a one-on-one meeting into the overall evaluation input section **37** in the screen **30** shown in Figure **1C** during or after a two-person communication with a second person, the inputted overall evaluation is inputted into the computer system **100** via the interface unit **110**, and the second receiving means **123** receives the overall evaluation from the interface unit **110**.

The second receiving means **123** can be further configured to receive evaluation for another communication received from the second person after the two-person communication. The second receiving means **123** may, for example, receive evaluation inputted into the computer system **100** via the interface unit **110** from the interface unit **110**.

As described above, a second person has another communication with the other party in some cases after completion of a two-person communication. For example, a person may communicate what could not be completely communicated in a two-person communication, or supplement what was communicated in the two-person communication. Such a communication is evaluated by the other party. The other party may be a first person or a person other than the first person. However, the person other than the first person must be a person with some type of a hierarchical relationship with the second person, who can have a two person-communication with the second person, just like the first person.

Evaluation for another communication can be inputted into the computer system **100** via the interface unit **110** from an information terminal used by a first person. For example, when a first person inputs evaluation for another communication after a two-person communication with a second person, the inputted evaluation is inputted into the computer system **100** via the interface unit **110**, and the second receiving means **123** receives the evaluation from the interface unit **110**.

Evaluation for another communication can be inputted into the computer system **100** via the interface unit **110** from an information terminal used by a person other than a first person. For example, when the person other than the first person inputs evaluation for another communication after a two-person communication with a second person, the inputted evaluation is inputted into the computer system **100** via the interface unit **110**, and the second receiving means **123** receives the evaluation from the interface unit **110**.

Such evaluation received by the second receiving means **123** can be transmitted to the database unit **200** via the interface unit **110** and stored in the database unit **200**.

The second receiving means **123** may receive evaluation for a response, overall evaluation, and evaluation for another communication stored in the database unit **200** via the interface unit **110** from the database unit **200**. The second receiving means **123** may be configured to receive only evaluation by a first person, only evaluation by one or more other people, or evaluation by the first person and one or more other people from the database unit **200**. For example, the second receiving means **123** receives only evaluation by a first person so that the providing means **122**' can deduce a characteristic of a second person unique to a two-person communication with the first person and provide an advice based thereon. For example, the second receiving means **123** receives evaluation by a plurality of people so that the providing means **122**' can deduce a characteristic of a second person that is universal in a two-person communication with each of the plurality of people and provide an advice based thereon.

The providing means **122**' is configured to provide, to a second person, an advice for a two-person communication based on at least one topic and response received by the receiving means **121** and evaluation for a response by the second person when the response is expected, which is received by the second receiving means **123**, in addition to or instead of the same configuration as the providing means **122** described above. The providing means **122**' may be configured to provide, as an advice, information directly obtained from at least one topic and response received by the receiving means **121** and evaluation received by the second receiving means **123** (i.e., information comprising at least one topic and response received by the receiving means **121** and evaluation received by the second receiving means **123**), or provide, as an advice, information indirectly obtained from at least one topic and response received by the receiving means **121** and evaluation received by the second receiving means **123** (i.e., information deduced from the database unit **200** based on at least one topic and response received by the receiving means **121** and evaluation received by the second receiving means **123** or information determined based on a characteristic of a second person determined based on at least one topic and response received by the receiving means **121** and evaluation received by the second receiving means **123**).

The providing means **122'** can provide an advice to a second person via the interface unit **110**. In this regard, an advice may be provided in any manner. For example, the providing means may be configured to transmit an advice to an information terminal used by a second person and display the advice on a screen of the information terminal, or to output the advice as a voice from a microphone of the information terminal.

The providing means **122**' may, for example, provide an advice to a second person prior to a two-person communication or provide an advice to a second person during a two-person communication.

In one embodiment, the providing means **122**' provides information comprising at least one topic and response and evaluation for a response given when the same response was expected in the past to a second person, whereby the second person can be aware of what topic a first person wishes to discuss in a two-person communication, what response is expected, and how their own response in the past was evaluated, so that the second person can strive to improve the quality of the two-person communication. For example, a second person can be aware of what topic a first person wishes to discuss in a two-person communication, what response is expected, and how their own response in the past was evaluated prior to the two-person communication to prepare for the two-person communication. In this regard, evaluation for a response given when the same response was expected in the past may be evaluation by the first person or evaluation by a plurality of people (e.g., mean, median, maxim, or minimum value of a plurality of evaluations, etc.)

In one embodiment, the providing means **122**' provides an advice determined based on at least one topic and response and evaluation for a response given when the same response was expected in the past to a second person. For example, the providing means **122**' draws out an advice, which is stored while being associated with at least one topic and response and evaluation for a response given when the same response was expected in the past from the database unit **200** and provides the advice to a second person. An advice can be, for example, a message indicating what should be noted in a two-person communication, etc., whereby a second person can be aware of what should be done to respond to the desire and expectation of a first person and strive to improve the quality of the two-person communication. For example, a second person can be aware of what should be done to respond to the desire and expectation of a first person prior to a two-person communication to prepare for the two-person communication.

In one embodiment, the providing means **122**' determines a characteristic of a second person based on at least one topic and response and evaluation for a response given when the same response was expected in the past, determines an advice based on the determined characteristic, and provides the determined advice to the second person. A characteristic of a second person is a characteristic when said response is expected in a two-person communication regarding at least one topic. For example, a characteristic of a second person is "proficient/non-proficient in response", "demonstrate ability/unable to demonstrate ability", "can act confidently/wither under pressure", etc. when response a is expected in a two-person communication regarding topic A. The providing means **122**' can, for example, deduce a characteristic of a second person associated with at least one topic and response and evaluation for a response given when the same response was expected in the past from the database unit **200** and determine this to be a characteristic of the second person. For example, the providing means **122**' draws out an advice stored while being associated with a determined characteristic from the database unit **200** and provides the advice to a second person. An advice can be, for example, a message indicating what should be noted in a two-person communication, etc., whereby a second person can be aware of what should be done to respond to the desire and expectation of a first person and strive to improve the quality of the two-person communication. For example, a second person can be aware of what should be done to respond to the desire and expectation of a first person prior to a two-person communication to prepare for the two-person communication.

In the embodiment described above, the providing means **122**' can determine a relative characteristic of a second person by comparing a determined characteristic of the second person with characteristics of plurality of other people stored in the database unit **200**. For example, the providing means **122**' can determine a relative characteristic within an organization of a second person by comparing a characteristic of the second person within the organization with a characteristic of another person in the same position within the organization.

In the embodiment described above, the providing means **122**' may be configured to determine a characteristic of a second person based on evaluation for a communication held separately from a two-person communication in the past, in addition to at least one topic and response and evaluation for a response given when the same response was expected in the past. For example, the providing means **122**' can deduce a characteristic of a second person associated with at least one topic and response, evaluation for a response given when the same response was expected in the past, and evaluation for a communication held separately from a two-person communication in the past from the database unit **200** and determine the characteristic as a characteristic of the second person.

In the embodiment described above, the providing means **122**' may be configured to compute a degree of effect of evaluation for a response by a second person received by the second receiving means **123** on overall evaluation to provide an advice based on the determined characteristic of the second person and the computed degree of effect. For example, the providing means **123** can compute the degree of effect of evaluation for a response by a second person on overall evaluation by performing multivariate analysis using the evaluation for a response by the second person as an explanatory variable and the overall evaluation as a response variable. Multivariate analysis can be, for example, regression analysis. Any linear regression model or non-linear regression model can be utilized in regression analysis.

For example, the providing means **122**' can provide an advice by placing weight on a response with the highest degree of effect on overall evaluation. Alternatively, the providing means **122**' can, for example, provide an advice by placing weight on at least one response with a degree of effect on overall evaluation greater than a threshold value. For example, providing means may be configured to provide more advices for a response than advices for another response, or provide an advice stating that a response should be handled with more care than for other responses.

With such a configuration, a second person provided with an advice can be aware of which response should have a higher focus in handling when a plurality of responses are expected for a plurality of topics and can thus suitably allocate effort in a two-person communication.

Each constituent element of the computer system **100** described above may be comprised of a single hardware part or a plurality of hardware parts. If comprised of a plurality of hardware parts, each hardware part can be connected in any mode. Each hardware part may be connected wirelessly or by a wired connection. The computer system **100** of the invention is not limited to a specific hardware configuration. The processing unit **120** comprised of an analog circuit instead of a digital circuit is also within the scope of the invention. The configuration of the computer system **100** of the invention is not limited to those described above, as long as the function thereof can be materialized.

### 4. Processing by a computer system for supporting a two-person communication

Figure **5** is a flowchart showing an example of processing **500** performed by the computer system **100** for supporting a two-person communication. The processing **500** is executed in the processing unit **120** of the computer system **100**.

At step **S501**, the receiving means **121** of the processing unit **120** receives at least one topic a first person wishes to discuss in a two-person communication and a response expected from a second person by the first person in a communication regarding the at least one topic. The receiving means **121** can receive at least one topic inputted into the computer system **100** via the interface unit **110** and an expected response from the interface unit **110**.

At least one topic and expected response can be inputted into the computer system **100** via the interface unit **110** from an information terminal used by a first person. For example, when a first person inputs a topic and expected response into the topic input section **22** and the response input section **23** in the screen **20** shown in Figure **1B** prior to a two-person communication with a second person, the inputted topic and expected response are inputted into the computer system **100** via the interface unit **110**, and the receiving means **121** receives the topic and expected response from the interface unit **110**.

At step **S502**, the providing means **122** of the processing unit **120** provides an advice for a two-person communication to a second person based on at least one topic and response. The providing means **122** may be configured to provide information directly obtained from at least one topic and response received at step **S501** (i.e., information comprising at least one topic and response received at step **S501**) as an advice, or to provide information indirectly obtained from at least one topic and response received at step **S501** (e.g., information deduced from the database unit **200** based on at least one topic and response received at step **S501**) as an advice.

The providing means **122** can provide an advice to a second person via the interface unit **110**. In this regard, an advice can be provided in any manner. For example, the providing means may be configured to transmit an advice to an information terminal used by a second person and display the advice on a screen of the information terminal, or to output the advice as a voice from a microphone of the information terminal. For example, the providing means **122** may provide an advice to a second person prior to or during a two-person communication.

Through the processing **500**, a second person can receive an advice for a two-person communication and strive to engage in an optimal manner with a first person in the two-person communication.

Figure **6** is a flowchart showing an example of another processing **600** performed by the computer system **100** for supporting a two-person communication. The processing **600** is executed in the processing unit **120**' of the computer system **100**.

At step **S601**, the receiving means **121** of the processing unit **120**' receives at least one topic a first person wishes to discuss in a two-person communication and a response expected from a second person by the first person in a communication regarding the at least one topic. The receiving means **121** can receive at least one topic inputted into the computer system **100** via the interface unit **110** and an expected response from the interface unit **110**.

At least one topic and expected response can be inputted into the computer system **100** via the interface unit **110** from an information terminal used by a first person. For example, when a first person inputs a topic and expected response into the topic input section **22** and the response input section **23** in the screen **20** shown in Figure **1B** prior to a two-person communication with a second person, the inputted topic and expected response are inputted into the computer system **100** via the interface unit **110**, and the receiving means **121** receives the topic and expected response from the interface unit **110**.

At step **S602**, the second receiving means **123** of the processing unit **120**' receives evaluation for a response by a second person when the same response as the response received at step **S601** is expected in a communication regarding at least one topic. The second receiving means **123** can receive evaluation inputted into the computer system **100** via the interface unit **110** from the interface unit **110**. For example, the second receiving means **123** may be configured to receive evaluation stored in the database unit **200** from the database **200** or to receive evaluation inputted by a first person from an information terminal used by the first person, or to receive evaluation inputted by a person other than the first person from an information terminal used by the person other than the first person.

At step **S603**, the providing means **122**' of the processing unit **120**' provides an advice for a two-person communication to a second person based on at least one topic and response received at step **S601** and evaluation received at step **S602**. The providing means **122**' may be configured to provide information directly obtained from at least one topic and response received at step **S601** and evaluation received at step **S602** (i.e., information comprising at least one topic and response received at step **S601** and evaluation received at step **S602**) as an advice, or to provide information indirectly obtained from at least one topic and response received at step **S601** and evaluation received at step **S602** (e.g., information deduced from the database unit **200** based on at least one topic and response received at step **S601** and evaluation received at step **S602**, or information determined based on a characteristic of a second person determined based on at least one topic and response received at step **S601** and evaluation received at step **S602**) as an advice.

The providing means **122**' can provide an advice to a second person via the interface unit **110**. In this regard, an advice can be provided in any manner. For example, the providing means may be configured to transmit an advice to an information terminal used by a second person and display the advice on a screen of the information terminal, or to output the advice as a voice from a microphone of the information terminal. For example, the providing means **122**' may provide an advice to a second person prior to or during a two-person communication.

Through the processing **600**, a second person can receive an advice for a two-person communication and strive to engage in an optimal manner with a first person in a two-person communication.

In one embodiment, step **S603** comprises the steps of the providing **122**' determining a characteristic of a second person based on at least one topic and response received at step **S601** and evaluation received at step **S602**, determining an advice based on the determined characteristic, and providing the determined advice to the second person. A characteristic of a second person is a characteristic when the response is expected in a two-person communication regarding at least one topic. With such a configuration, the providing means **122**' can provide an advice in accordance with a characteristic of a second person and improve the quality of the advice provided. This can also lead to improvement in the quality of a two-person communication.

In the embodiment described above, the second receiving means **123** may be further configured to receive evaluation for a communication held separately from a two-person communication in the past at step **S602**. At this time at step **S603**, the providing means **122**' can determine a characteristic of a second person based on at least one topic and response received at step **S601**, and evaluation for a communication which is separate from evaluation received at step **S602**, whereby the providing means **122**' can determine the characteristic of the second person from not only evaluation for a two-person communication, but also evaluation for a communication held separately from a two-person communication, and improve the precision of the determined characteristic of the second person. Such a configuration can improve the quality of the provided advice, which can lead to improvement in the quality of a two-person communication.

In the embodiment described above, the second receiving means **123** may be further configured to receive overall evaluation of a two-person communication at step **S602**. At this time, step **S603** can comprise the steps of the providing means **122**' computing a degree of effect of evaluation on overall evaluation based on the evaluation and overall evaluation received at step **S602**, determining a characteristic of a second person based on at least one topic and response received at step **S601** and evaluation received at step **S602**, determining an advice based on the determined characteristic, and providing the determined advice to the second person, whereby the providing means **122**' can provide an advice by placing a weight on a response with a high degree of effect on the overall evaluation of a two-person communication. Such a configuration can improve the quality of the provided advice, which can lead to improvement in the quality of a two-person communication.

While the processing **600** was described as performing step **S602** after step **S601**, the order of step **S601** to **S602** is not limited thereto. For example, step **S601** may be performed after step **S602**.

The examples described above with reference to Figures **5** and **6** describe that processing at each step shown in Figures **5** and **6** is materialized by the processing unit **120** or the processing unit **120**' and a program stored in the memory unit **130**, but the present invention is not limited thereto. At least one of the processing at each step shown in Figures **5** and **6** may be materialized by a hardware configuration such as a control circuit.

The present invention is not limited to the aforementioned embodiments. It is understood that the scope of the present invention should be interpreted solely from the scope of the claims. It is understood that those skilled in the art can implement an equivalent scope, based on the descriptions of the invention and common general knowledge, from the descriptions of the specific preferred embodiments of the invention.

### [Industrial Applicability]

The present invention is useful as an invention providing a computer system, program, or method for supporting a two-person communication.

### [Reference Signs List]

- **100**: Computer system
- **110**: Interface unit
- **120**, **120**': Processing unit
- **130**: Memory unit

## Claims

1. A computer system for supporting a two-person communication, comprising:
receiving means for receiving at least one topic a first person between two people wishes to discuss in the communication and a response expected from a second person between the two people by the first person in the communication regarding the at least one topic; and
providing means for providing an advice for the communication to the second person based on the at least one topic and the response.

2. The computer system of claim 1, further comprising:
second receiving means for receiving evaluation for a response by the second person when a same response as the response is expected in the communication regarding the at least one topic;
wherein the providing means is configured to provide an advice for the communication based on the at least one topic, the response, and the evaluation for the response.

3. The computer system of claim 2, wherein the providing means is configured to:
determine a characteristic of the second person when the response is expected in the communication regarding the at least one topic based on the at least one topic, the response, and the evaluation for the response; and
determine the advice based on the determined characteristic.

4. The computer system of claim 3, wherein
the second receiving means further receives evaluation for another communication received from the second person after the communication, and
the providing means determines a characteristic of the second person based on the at least one topic, the response, the evaluation for the response, and the evaluation for the another communication.

5. The computer system of claim 3 or 4, wherein
the second receiving means further receives overall evaluation, which is evaluation for the entire communication,
the at least one topic is a plurality of topics, and
the providing means is configured to:
compute a degree of effect of the evaluation on the overall evaluation for the plurality of topics; and
determine the advice based on the determined characteristic and the degree of effect.

6. The computer system of any one of 1 to 5, wherein the providing means is configured to provide the advice to the second person before and/or during the communication.

7. The computer system of any one of 1 to 6, wherein the advice comprises what should be noted by the second person in the communication regarding the at least one topic.

8. The computer system of any one of 1 to 7, wherein the first person is a member in an organization, and the second person is a supervisor of the member.

9. A method for supporting a two-person communication, comprising:
receiving at least one topic a first person between two people wishes to discuss in the communication and a response expected from a second person between the two people by the first person in the communication regarding the at least one topic; and
providing an advice for the communication to the second person based on the at least one topic and the response.

10. A program for supporting a two-person communication wherein the program is executed in a computer system comprising a processing unit, the program causing the processing unit to perform processing comprising:
receiving at least one topic a first person between two people wishes to discuss in the communication and a response expected from a second person between the two people by the first person in the communication regarding the at least one topic; and
providing an advice for the communication to the second person based on the at least one topic and the response.
